# EUROPEAN PATENT APPLICATION

(11) **EP 2 521 116 A1**
(43) Date of publication of application: **07.11.2012**
(21) Application number: 10841059.8
(22) Date of filing: 28.12.2010
(51) Int. Cl.: G09F 9/00, G02F 1/1333

(54) **METHOD FOR MANUFACTURING A DISPLAY DEVICE**

(30) Priority: 28.12.2009 JP 2009297553
(71) Applicant: Asahi Glass Company, Limited, Chiyoda-ku Tokyo 100-8405 (JP)
(72) Inventor: NIIYAMA, Satoshi, Tokyo 100-8405 (JP); AOKI, Naoko, Tokyo 100-8405 (JP)
(74) Representative: Müller-Boré & Partner Patentanwälte
(86) International application number: PCT/JP2010/073785
(87) International publication number: WO 2011/081204

(57) **Abstract**

To provide a process for producing a display system, whereby the interface bonding strength between a resin layer and another layer can be made high, formation of air bubbles can be sufficiently suppressed, and curing of a curable resin composition can be sufficiently carried out. The process comprises (a) a step of forming an uncured seal part 12 containing a photopolymerization initiator (C1) along the periphery of a display device 50, (b) a step of supplying a curable resin composition 14 containing a photopolymerization initiator (C2) within the uncured seal part 12, (c) a step of laminating a transparent plate 10 on the curable resin composition 14 in a reduced-pressure atmosphere of at most 100 Pa, and (d) a step of applying light from the transparent plate 10 side to the curable resin composition 14, and applying light from the lateral side to the uncured seal part 12 and the curable resin composition 14, in a pressure atmosphere of at least 50 kPa, wherein the above (C2) has an absorption wavelength range (λ2) on the longer wavelength side than an absorption wavelength range (λ1) of the above (C1), and light applied from the lateral side in the step (d) contains light with a wavelength in the above (λ1) and with a wavelength in the above (λ2).

## Description

### TECHNICAL FIELD

The present invention relates to a process for producing a display system wherein a display device is protected by a transparent plate.

### BACKGROUND ART

As methods for producing a display system wherein a display device is protected by a transparent plate, the following ones are known.
(1) A method wherein on a protective plate made of a resin, a liquid raw material is poured and cured to form a bonding resin, or on a protective plate made of a resin, a roll-sheet shaped bonding resin is bonded in a deaerated state, and then, from one end a liquid crystal cell is press-bonded in a deaerated state to prepare a display system (Patent Document 1).
(2) A method wherein a display panel is positioned and temporarily fixed by a fixing member at a predetermined position of a protective plate made of glass, and then, in a space formed between the protective plate and the display panel, a liquid resin material is injected and cured in a reduced-pressure state to prepare a display system (Patent Document 2).

However, the method (1) has the following problems.
· It is required to carry out formation of the bonding resin on the protective plate and bonding of the liquid crystal cell to the formed bonding resin in separate steps, whereby the production tends to be cumbersome.
· It is required to use a dish-shaped protective plate having a side wall on its periphery, whereby processing of such a protective plate is separately required, and further, since the protective plate is limited to a size of not larger than the liquid crystal cell, there is a substantial restriction in the method for installing the protective plate.
· Air bubbles are likely to be formed in the liquid resin material at the time of pouring it to form the bonding resin on the protective plate.

Whereas, the method (2) has the following problems.
· It is required to carry out positioning and temporary fixing of the liquid crystal panel to the protective plate, and injection of the liquid resin material in a space between the protective plate and the liquid crystal panel in separate steps, whereby the production tends to be cumbersome.
· In the production of a large-sized display system, a long time may be required for the injection of the liquid resin material, and air bubbles are likely to remain in the liquid resin material during the injection, since the degree of reduced pressure during the injection is from 1.33×10⁴ to 6.67×10⁴ Pa.

Thus, in each of the methods (1) and (2), air bubbles are likely to be formed in the resin layer between the display device and the protective plate of the display system. If air bubbles are formed in the resin layer, the following problems will be occurred.
· The interface bonding strength between the resin layer and the display device, or the interface bonding strength between the resin layer and the protective plate, tends to decrease.
· If air bubbles are formed in the resin layer between the display device and the protective plate, it is likely that outgoing light or reflected light from the display device will be distorted by the air bubbles, whereby the quality of display image may be impaired substantially.
· In a case where an image is not displayed in the display device, air bubbles remaining in the resin layer can be observed easily through the protective plate, whereby the quality of display image may be impaired substantially.

### PRIOR ART DOCUMENTS

### PATENT DOCUMENTS

Patent Document 1: JP-A-7-209635
Patent Document 2: JP-A-2006-58753

### DISCLOSURE OF INVENTION

### TECHNICAL PROBLEM

The present invention is to provide a process for producing a display system having a display device protected by a transparent plate, whereby the interface bonding strength between the resin layer and the display device, and the interface bonding strength between the resin layer and the protective plate can be made high, formation of air bubbles in a liquid curable resin composition can be sufficiently suppressed, and curing of the curable resin composition can be sufficiently carried out.

### SOLUTION TO PROBLEM

The process for producing a display system of the present invention is a process for producing a display system comprising first and second plates, one of which is a transparent plate and the other is a display device, a resin layer interposed between the first and second plates, and a seal part enclosing the periphery of the resin layer, wherein a light shielding part is formed along the periphery of the transparent plate, and an area of a light transmitting part enclosed by the light shielding part is made smaller than an area of the resin layer enclosed by the seal part, which process comprises the following steps (a) to (d), wherein the following photopolymerization initiator (C2) has an absorption wavelength range (λ2) existing in the longer wavelength side than an absorption wavelength range (λ1) of the following photopolymerization initiator (C1), and light applied from the lateral side of the laminated member in the following step (d) contains light with a wavelength in the absorption wavelength range (λ1) and light with a wavelength in the absorption wavelength range (λ2):
(a) a step of forming an uncured seal part by applying a liquid seal part-forming photocurable resin composition comprising a curable compound and a photopolymerization initiator (C1), along the periphery of a surface of the first plate,
(b) a step of supplying a liquid resin layer-forming photocurable resin composition comprising a curable compound and a photopolymerization initiator (C2), to a region enclosed by the uncured seal part,
(c) a step of laminating the second plate on the resin layer-forming photocurable resin composition in a reduced-pressure atmosphere of at most 100 Pa, to obtain a laminated member having the resin layer-forming photocurable resin composition hermetically sealed by the first and second plates and the uncured seal part, and
(d) a step of curing the uncured seal part and the resin layer-forming photocurable resin composition by applying light from the transparent plate side of the laminated member through the light transmitting part to the resin layer-forming photocurable resin composition, and applying light from the lateral side of the laminated member to the uncured seal part interposed between the light shielding part and the display device, and to the resin layer-forming photocurable resin composition, in such a state that the laminated member is placed in an atmospheric pressure of at least 50 kPa.

Further, in the process for producing a display system of the present invention, it is preferred that the photopolymerization initiator (C1) has an absorption wavelength range (λ1) for ultraviolet light but does not have an absorption wavelength range for visible light, and the photopolymerization initiator (C2) has at least an absorption wavelength range (λ2) for visible light of at most 600 nm.

Further, in the step (d) in the process for producing a display system of the present invention, it is preferred that the light applied from the transparent plate side of the laminated member through the light transmitting part to the resin layer-forming photocurable resin composition, is ultraviolet light, and when the light is applied from the lateral side of the laminated member to the uncured seal part interposed between the light shielding part and the display device, and to the resin layer-forming photocurable resin composition, firstly, (1) light having an ultraviolet light wavelength range (λ1) but having no visible light wavelength range, is applied, and then, (2) light having an emission of at least visible light, is applied.

Further, in the process for producing a display system of the present invention, it is preferred that the seal part-forming photocurable resin composition comprises at least one oligomer (A) having a curable functional group and having a number average molecular weight of from 30,000 to 100,000, at least one monomer (B) having a curable functional group and having a molecular weight of from 125 to 600, and a photopolymerization initiator (C1), and the photopolymerization initiator (C1) is contained in an amount of from 0.01 to 10 parts by mass, per 100 parts by mass of the total of the oligomer (A) and the monomer (B).

Further, in the process for producing a display system of the present invention, it is preferred that the seal part-forming photocurable resin composition comprises at least one oligomer (A) having a curable functional group and having a number average molecular weight of from 30,000 to 100,000, at least one monomer (B) having a curable functional group and having a molecular weight of from 125 to 600, and photopolymerization initiators (C1) and (C2), and the photopolymerization initiators (C1) and (C2) are contained in an amount of from 0.01 to 10 parts by mass in total, per 100 parts by mass of the total of the oligomer (A) and the monomer (B).

Further, in the process for producing a display system of the present invention, it is preferred that the resin layer-forming photocurable resin composition comprises at least one oligomer (A') having a curable functional group and having a number average molecular weight of from 1,000 to 100,000, at least one monomer (B') having a curable functional group and having a molecular weight of from 125 to 600, and a photopolymerization initiator (C2), and the photopolymerization initiator (C2) is contained in an amount of from 0.01 to 10 parts by mass, per 100 parts by mass of the total of the oligomer (A') and the monomer (B').

Further, in the process for producing a display system of the present invention, it is preferred that in the laminated member obtainable in the step (c), the thickness of the resin layer-forming photocurable resin composition is from 10 µm to 3 mm.

Further, in the process for producing a display system of the present invention, it is preferred that the thickness of the resin layer-forming photocurable resin composition obtainable by curing in the step (d), is from 0.03 to 2 mm.

Further, in the process for producing a display system of the present invention, it is preferred that the thickness of the transparent plate is from 0.5 to 2 mm.

Further, in the process for producing a display system of the present invention, it is preferred that the width of the seal part obtainable in the step (a), is from 0.5 to 2 mm.

Further, in the process for producing a display system of the present invention, it is preferred that the display system is a liquid crystal display system which has a size of at least 0.5 m × at least 0.4 m by vertical length × horizontal length.

### ADVANTAGEOUS EFFECTS OF INVENTION

According to the process for producing a display system of the present invention, the interface bonding strength between the resin layer and the display device and the interface bonding strength between the resin layer and the protective plate can be made high, and formation of air bubbles in the liquid curable resin composition can be sufficiently suppressed and curing of the curable resin composition can be sufficiently carried out.

### BRIEF DESCRIPTION OF DRAWINGS

Fig. 1 is a cross sectional view illustrating an example of a display system having a display device protected by a transparent plate.
Fig. 2 is a plan view of the display system in Fig. 1.
Fig. 3 is a plan view illustrating an example of the state of step (a) in the process of the present invention.
Fig. 4 is a cross sectional view illustrating an example of the state of step (a) in the process of the present invention.
Fig. 5 is a plan view illustrating an example of the state of step (b) in the process of the present invention.
Fig. 6 is a cross sectional view illustrating an example of the state of step (b) in the process of the present invention.
Fig. 7 is a cross sectional view illustrating an example of the state of step (c) in the process of the present invention.
Fig. 8 is a cross sectional view illustrating an example of the state of step (d) in the process of the present invention.
Fig. 9 is a graph showing the absorption characteristics of IRGACURE 184 in acetonitrile solutions.
Fig. 10 is a graph showing the absorption characteristics of IRGACURE 819 in acetonitrile solutions.
Fig. 11 is a schematic cross sectional view illustrating a display system having a display device protected by a transparent plate.
Fig. 12 is a schematic plan view illustrating a display system having a display device protected by a transparent plate.
Fig. 13 is a graph showing a photochromic distribution of a chemical lamp used for applying light to a laminate precursor E in Example 1.

### DESCRIPTION OF EMBODIMENTS

In the present invention, the following definitions will apply.

In the display system, the transparent plate to constitute a protective plate for the display device is referred to as "the front plate", and the display device is referred to as "the back plate".

The front plate and the back plate are generally referred to as "plates".

Among the plates, the plate wherein a seal part is formed along its periphery and a liquid state photocurable resin composition is supplied to the region enclosed by the seal part in the process of the present invention, is referred to as "the first plate", and the plate to be laminated on the photocurable resin composition is referred to as "the second plate".

A plate having optical transparency is referred to as "a transparent plate".

A transparent plate made of glass is referred to as "a glass plate".

### <Display system>

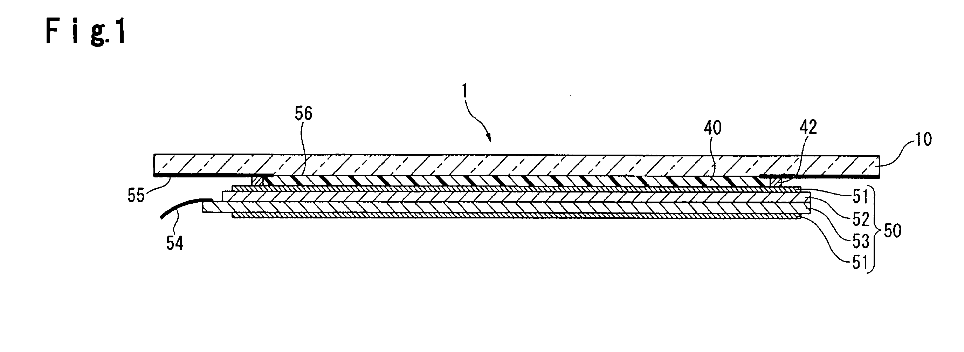

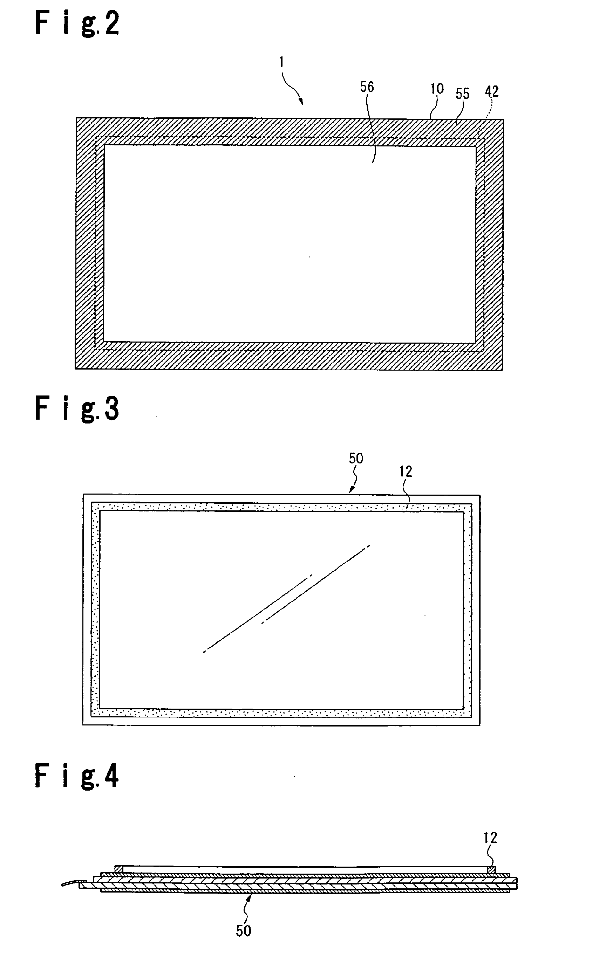

Fig. 1 is a cross sectional view illustrating an example of the display system in the present invention, and Fig. 2 is its plan view.

The display system 1 comprises a transparent plate 10 as the front plate, a display device 50 as the back plate, a resin layer 40 interposed between the transparent plate 10 and the display device 50, a seal part 42 enclosing the periphery of the resin layer 40, a flexible printed circuit board 54 (FPC) connected to the display device 50 and mounting a driving IC to drive the display device 50, and a light shielding printed part 55 (light shielding part) formed along the periphery of the transparent plate 10. Here, in a case where the seal part is formed along the peripheral portion of the transparent plate 10 and a liquid curable resin composition is supplied to the region enclosed by the seal part, the transparent member 10 becomes the first plate, and the display device 50 becomes the second plate. On the other hand, in a case where a seal part is formed along the peripheral portion of the above display device 50, and a liquid curable resin composition is supplied to the region enclosed by the seal part, the display device 50 becomes the first plate, and the transparent member 10 becomes the second plate.

In the display system 1, the area of a light-transmitting part 56 enclosed by the light-shielding printed part 55 is made to be smaller than the area of the resin layer 40 enclosed by the seal part 42; the area of the transparent plate 10 is made to be larger than the area of the display device 50; and the total area of the resin layer 40 and the seal part 42 is made to be smaller than the area of the transparent plate 10 or the display device 50.

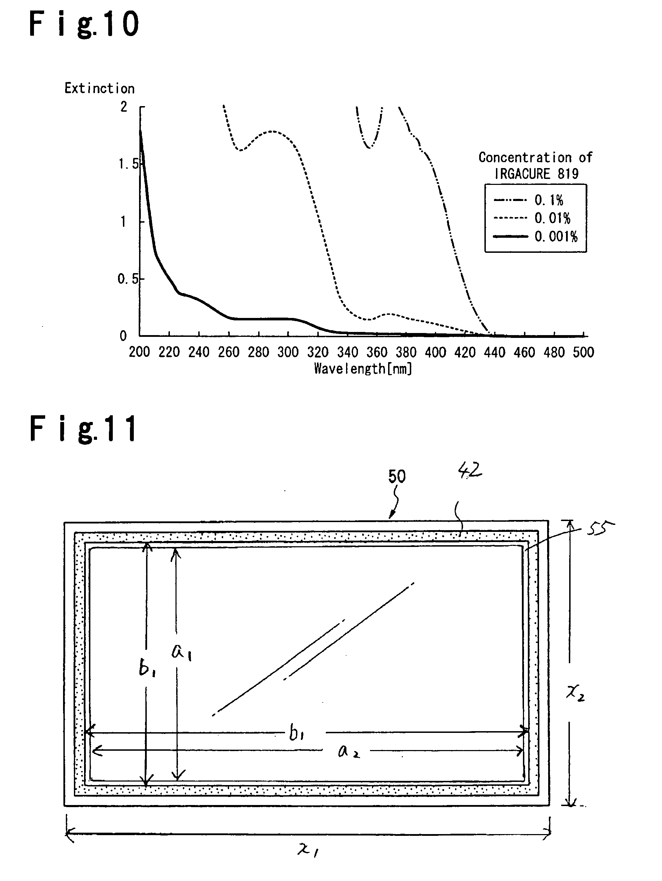

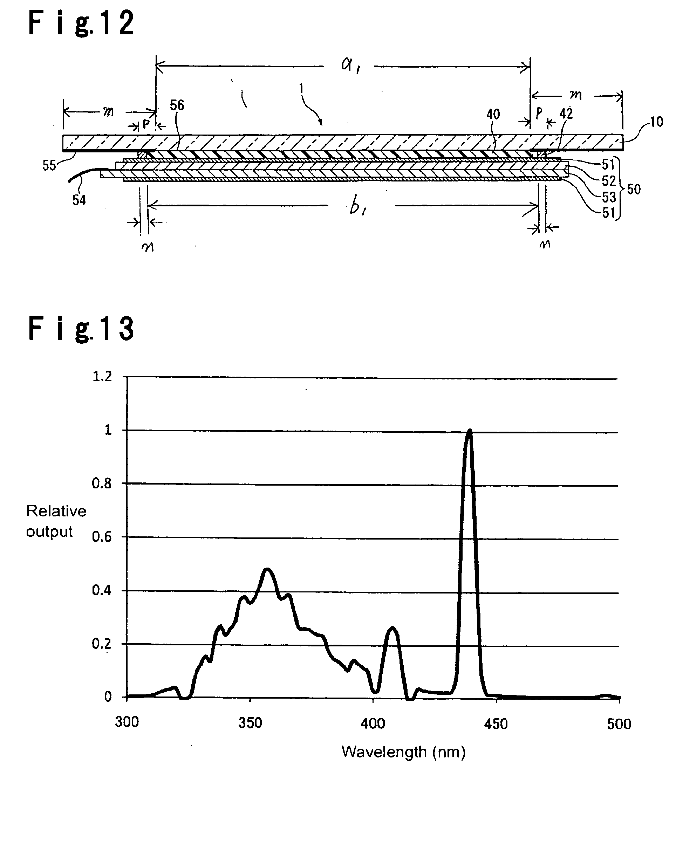

That is, the area of the light transmitting part 56 enclosed by the light shielding printed part 55 is, as shown for example in Figs. 11 and 12, an area (a₁×a₂) obtained by the vertical and horizontal lengths a₁ and a₂ between inner edges of the light shielding printed part 55 formed along the periphery of the transparent plate 10, and the area of the resin layer 40 enclosed by the seal part 42 is, as shown for example in the same Figs., an area (b₁×b₂) obtained by the vertical and horizontal lengths b₁ and b₂ between inner edges of the seal part 42 formed along the periphery of the transparent plate 10. Here, in Fig. 12, m is the width of the light shielding printed part 55 formed along the periphery of the transparent plate 10, and n represents the width of the seal part.

### (Front plate)

The front plate is a protective plate for the display device and is a transparent plate to transmit a display image of the display device.

As the transparent plate, a glass plate or a transparent resin plate may be mentioned, and a glass plate is most preferred not only from such a viewpoint that the transparency is high to outgoing light or reflected light from the display device, but also from such a viewpoint that it has light stability, low birefringence, high flatness, scratch resistance and high mechanical strength. A glass plate is preferred also from such a viewpoint that it sufficiently transmits light to cure a photocurable resin composition.

As the material for such a glass plate, a glass material such as soda lime glass may be mentioned, and less bluish high transmission glass having a less iron content (white plate glass) is more preferred. In order to increase the safety, tempered glass may be used as the front plate.

As the material for the transparent resin plate, a highly transparent resin material (such as a polycarbonate or a polymethyl methacrylate) may be mentioned.

To the transparent plate, surface treatment may be applied in order to improve the interface bonding strength with the resin layer. As a method for surface treatment, a method may, for example, be mentioned wherein the surface of a transparent plate is treated with a silane coupling agent.

To the transparent plate, an antireflection layer may be formed on the rear side of the surface bonded to the resin layer in order to increase a contrast ratio of the display image. The antireflection layer may be formed by a method wherein an inorganic thin film is formed directly on the surface of the transparent plate, or a method wherein a transparent resin film provided with an antireflection layer is bonded to the transparent plate.

Further, depending upon the purpose of the image display, a part or whole of the transparent plate may be colored, may be made to scatter light like frosted glass, or may be made to refract or reflect light during the transmission by fine irregularities, etc. on the surface. Otherwise, one having bonded to the transparent plate e.g. an optical film to carry out optical modulation such as an optical film or a polarizing film showing the above mentioned function, may be used in the form of an integral unit as the transparent plate.

The thickness of the transparent plate is usually from 0.5 to 25 mm in the case of a glass plate, from the viewpoint of the mechanical strength and transparency. In an application to e.g. a television receiver to be used outdoors or a display for PC, it is preferably from 1 to 6 mm, particularly preferably from 0.5 to 2 mm, with a view to reducing the weight of the display system, and in an application to a public display to be installed outdoors, it is preferably from 3 to 20 mm. In the case of a transparent resin plate, the thickness is preferably from 2 to 10 mm.

### (Back plate)

The back plate is a display device.

The display device 50 shown in the drawings is an example of a liquid crystal display device of a structure wherein a transparent plate 52 provided with a color filter and a transparent plate 53 provided with TFT are bonded together, and the bonded assembly is sandwiched by a pair of polarizing plates 51. However, the display device in the present invention is not limited to the one illustrated in the drawings.

The display device is one wherein a display material, of which the optical mode is changed by external electrical signals, is sandwiched by a pair of electrodes, of which at least one is transparent electrode. Depending upon the type of the display material, the display device may, for example, be a liquid crystal display device, an EL display device, a plasma display device or an electronic ink display device. Further, the display device has a structure wherein a pair of plates are bonded together, of which at least one is a transparent plate, and it is disposed so that the transparent plate side is in contact with the resin layer. At that time, in some display devices, an optical film such as a polarizing plate or a retardation film may be provided on the outermost layer side of the transparent plate facing to the resin layer. In such a case, the resin layer has a configuration of bonding the optical film on the display device to the front plate.

Surface treatment may be applied to the surface of the display device to be bonded to the resin layer in order to improve the interface bonding strength with the seal part. Such surface treatment may be applied only along the periphery or over the entire surface of the plate. As the method for surface treatment, a method of treatment with a low temperature processable bonding primer may, for example, be mentioned.

The thickness of the display device is usually from 0.4 to 4 mm in the case of a liquid crystal display device to be operated by TFT, or usually from 0.2 to 3 mm in the case of an EL display device.

### (Resin layer)

The resin layer is a layer which laminates the front plate and the back plate and is a layer which is formed by curing a liquid resin layer-forming photocurable resin composition as described hereinafter. For the display system, it is preferred to use a resin layer-forming photocurable resin composition whereby the elastic modulus of a resin after curing becomes low. If the elastic modulus of the resin is high, the stress formed by e.g. a shrinkage at the curing time of the resin is likely to impair the display performance of the display device.

The thickness of the resin layer is preferably from 0.03 to 2 mm, more preferably from 0.1 to 0.8 mm. When the thickness of the resin layer is at least 0.03 mm, the resin layer will effectively buffer an impact, etc. by an external force from the transparent plate side, thereby to protect the display device. Further, also in the process of the present invention, even if a contaminant having thickness of larger than the thickness of the resin layer is introduced between the transparent plate and the display device, the thickness of the resin layer may not substantially be changed, and there may be no substantial influence to the optical transparency. When the thickness of the resin layer is at most 2 mm, air bubbles are less likely to remain in the resin layer, and the entire thickness of the display system will not be unnecessarily thick.

The method for adjusting the thickness of the resin layer may be a method of adjusting the thickness of the after-mentioned seal part, and adjusting the amount of the liquid resin layer-forming photocurable resin composition to be supplied to the first plate.

### (Seal part)

The seal part is one that is formed by applying and curing a liquid seal part-forming photocurable resin composition as described hereinafter. Since the region outside of the image display region of the display device is relatively narrow, the width of the seal part is preferably made to be narrow. The width of the seal part is preferably from 0.5 to 2 mm, more preferably from 0.8 to 1.6 mm.

### (Light shielding printed part)

The light shielding printed part is one to shield e.g. a wiring member connected to the display device, so that other than the image display region of the display device is not visible from the transparent plate side. The light shielding printed part may be formed on the surface bonded to the resin layer, of the transparent plate, or on its back surface, but with a view to reducing the parallax between the light shielding printed part and the image display region, it is preferably formed on the surface bonded to the resin layer, of the transparent plate. In a case where the transparent plate is a glass plate, it is preferred to adopt printing using a ceramic coating material containing a black pigment for the light shielding printed part, whereby the light shielding property will be high.

### (Shape)

The shape of the display system is usually rectangular.

The process of the present invention is suitable particularly for the production of a display system with a relatively large display area, and therefore, in the case of a television receiver using a liquid crystal display device i.e. in the case of a liquid crystal display system for a television receiver, the size of the display system is suitably at least 0.5 m × at least 0.4 m, particularly preferably at least 0.7 m × at least 0.4 m by vertical length × horizontal length. The upper limit of the size of the display system is determined in many cases by the size of the display device. If the display system is too large, its handling, for example, in its installation tends to be difficult. From such restrictions, the upper limit of the size of the display system is usually about 2.5 m × 1.5 m.

The sizes of the transparent plate as the protective plate and the display device may be substantially equal, but from the relation with another housing for accommodating the display system, the transparent plate may be slightly larger than the display device in many cases. On the contrary, depending upon the structure of another housing, the transparent plate may be made to be slightly smaller than the display device.

### <Process for producing display system>

The process for producing a display system of the present invention is a process which comprises the following steps (a) to (d). More specifically, it is a process for producing a display system which comprises the following steps (a) to (d) in this order.
(a) A step of forming an uncured seal part by applying a liquid seal part-forming photocurable resin composition comprising a curable compound and a photopolymerization initiator (hereinafter, a photopolymerization initiator contained in the seal part-forming photocurable resin composition will be referred to as C1), along the periphery of a surface of the first plate,
(b) a step of supplying a liquid resin layer-forming photocurable resin composition comprising a curable compound and a photopolymerizable initiator (hereinafter a photopolymerization initiator contained in the resin layer-forming photocurable resin composition will be referred to as C2), to a region enclosed by the uncured seal part,
(c) a step of laminating, in a reduced-pressure atmosphere of at most 100 Pa, the second plate on the resin layer-forming photocurable resin composition formed on the first plate, to obtain a laminated member having the resin layer-forming photocurable resin composition hermetically sealed by the first and second plates and the uncured seal part (provided that in a case where an antireflection film is formed on the surface of the second plate, the second plate is laminated so that the surface of its back side is in contact with the resin layer-forming photocurable resin composition, or in a case where the second plate is a display device, it is laminated so that the surface side where an image is displayed is in contact with the resin layer-forming photocurable resin composition), and
(d) a step of curing the uncured seal part and the resin layer-forming photocurable resin composition by applying light from the transparent plate side of the laminated member (i.e. the front surface side of the transparent plate) through the light transmitting part to the resin layer-forming photocurable resin composition, and applying light from the lateral side of the laminated member to the uncured seal part interposed between the light shielding part and the display device, and to the resin layer-forming photocurable resin composition, in such a state that the laminated member is placed in a pressure atmosphere of at least 50 kPa.

Further, in the above description, there may be a case where the above mentioned first plate becomes a back plate, or a case where it becomes the front plate.

The process of the present invention is a process wherein in a reduced-pressure atmosphere, the liquid resin layer-forming photocurable resin composition is sealed in between the first plate and the second plate, and then, in a high pressure atmosphere such as the atmospheric air atmosphere, the sealed resin layer-forming photocurable resin composition is cured to form a resin layer. The sealing of the resin layer-forming photocurable resin composition under reduced-pressure atmosphere is not a method of injecting the resin layer-forming photocurable resin into a wide space with a narrow gap between the first and second plates, but a method of supplying the resin layer-forming photocurable resin composition over a substantially entire surface of the first plate, and then laminating the second plate to seal the resin layer-forming photocurable resin composition between the first and second plates.

With respect to the transparent laminated member obtained by sealing a liquid resin layer-forming photocurable resin composition under reduced-pressure atmosphere and curing of the resin layer-forming photocurable resin composition under the atmospheric pressure, reference may be made, for example, to the process for producing a transparent laminated member and a photocurable resin composition to be used for such a process, as disclosed in International Publications WO2008/81838 and WO2009/16943. The descriptions in these International Publications are hereby included by reference as a part of the disclosure of this specification.

Now, steps (a) to (d) will be described in detail.

### (Step (a))

Firstly, an uncured seal part is formed along the periphery of one surface of the first plate. It is optional to use a back plate or a front plate as the first plate.

In a case where the first plate is a transparent plate for a protective plate of the display device, one of the two surfaces may be optionally selected as the surface on which the uncured seal part is to be formed. In a case where the nature is different between the two surfaces, the necessary one surface is selected. For example, in a case where surface treatment to improve the interface bonding strength to the resin layer is applied to one surface, the uncured seal part is formed on such a surface. Otherwise, in a case where an antireflection layer is formed on one surface, the uncured seal part is formed on the backside thereof.

In a case where the first plate is a display device, the surface on which the uncured seal part is to be formed, is the surface on the side where the image is to be displayed.

It is important that the uncured seal part has an interface bonding strength to such an extent that the liquid resin layer-forming photocurable resin composition will not leak out from the interface between the uncured seal part and the first plate and from the interface between the uncured seal part and the second plate and a rigidity to such an extent that the shape can be maintained, in the after-described step (c). Therefore, the uncured seal part is preferably formed by applying a seal part-forming photocurable resin composition having a high viscosity by printing, dispensing or the like.

Further, in order to maintain a distance between the first plate and the second plate, spacer particles having a predetermined particle size may be incorporated to the seal part-forming photocurable resin composition.

The seal part-forming photocurable resin composition is a liquid composition comprising a curable compound and a photopolymerization initiator (C1).

The viscosity of the seal part-forming photocurable resin composition is preferably from 500 to 3,000 Pa·s, more preferably from 800 to 2,500 Pa·s, further preferably from 1,000 to 2,000 Pa·s. When the viscosity is at least 500 Pa·s, the shape of the uncured seal part can be maintained for a relatively long period of time, and the height of the seal part can be sufficiently maintained. When the viscosity is at most 3,000 Pa·s, the seal part can be formed by coating.

The viscosity of the seal part-forming photocurable resin composition is measured by means of an E model viscometer at 25°C.

The seal part-forming photocurable resin composition is preferably one which comprises, as the above curable compound, at least one oligomer (A) having a curable functional group and having a number average molecular weight of from 30,000 to 100,000 and at least one monomer (B) having a curable functional group and having a molecular weight of from 125 to 600, wherein the ratio of the monomer (B) is from 15 to 50 mass% based on the total (100 mass%) of the oligomer (A) and the monomer (B), from such a viewpoint that the viscosity can be easily adjusted to be within the above range.

The number average molecular weight of the oligomer (A) is from 30,000 to 100,000, preferably from 40,000 to 80,000, more preferably from 50,000 to 65,000. When the number average molecular weight of the oligomer (A) is within such a range, the viscosity of the seal part-forming photocurable resin composition can easily be adjusted to be within the above mentioned range.

The number average molecular weight of the oligomer (A) is a number average molecular weight calculated as polystyrene, obtained by GPC measurement. Here, in the GPC measurement, in a case where a peak attributable to an unreacted low molecular weight component (such as a monomer) appears, the number average molecular weight is obtained by excluding such a peak.

The curable functional group of the oligomer (A) may, for example, be an addition-polymerizable unsaturated group (such as an acryloyloxy group or a methacryloyloxy group) or a combination of an unsaturated group and a thiol group, and it is preferably at least one type of group selected from the group consisting of an acryloyloxy group and a methacryloyloxy group from such a viewpoint that the curing rate is high and a highly transparent seal part can be obtained. Further, a curable functional group in the oligomer (A) having a relatively high molecular weight tends to have a lower reactivity than a curable functional group in the monomer (B) having a relatively low molecular weight, and accordingly, curing of the monomer (B) is likely to proceed preferentially, whereby the viscosity of the entire composition may rapidly increase, and the curing reaction may become non-uniform. In order to minimize the difference in the reactivity between curable functional groups of the two and to obtain a homogenous seal part, it is more preferred that the curable functional group of the oligomer (A) is selected to be an acryloyloxy group having a relatively high reactivity, and the curable functional group of the monomer (B) is selected to be a methacryloyloxy group having a relatively low reactivity.

The oligomer (A) is preferably one having an average from 1.8 to 4 curable functional groups, per molecule, from a view point of the curing property of the seal part-forming photocurable resin composition and the mechanical properties of the seal part.

The oligomer (A) may, for example, be an urethane oligomer having an urethane bond, a poly(meth)acrylate of a polyoxyalkylene polyol or a poly(meth)acrylate of a polyester polyol, and an urethane oligomer (A1) is preferred from such a viewpoint that the mechanical properties of the resin after curing, the adhesion to the plates, etc. can be widely adjusted by e.g. the molecular design of the urethane chain.

An urethane oligomer (A1) having a number average molecular weight of from 30,000 to 100,000 becomes to have a high viscosity and is difficult to synthesize by a usual method, and even if it can be synthesized, mixing with the monomer (B) tends to be difficult. Accordingly, in the present invention, it is preferred that an urethane oligomer (A1) is synthesized by the following preparation method, and then, the obtained product is used as it is, as a seal part-forming photocurable resin composition, or the obtained product is further diluted with the after-described monomer (B) (such as monomer (B1) or monomer (B3)) and used as a seal part-forming photocurable resin composition.

### PREPARATION METHOD FOR URETHANE OLIGOMER (A1):

In the presence of a monomer (B1) having no reactive group with an isocyanate group, which is one of the after-described monomer (B), used as a diluent, a polyol and a polyisocyanate are reacted to obtain a prepolymer having isocyanate groups, and then, a monomer (B2) having a group reactive with an isocyanate group, and a curable functional group, is reacted to the isocyanate groups of the prepolymer.

As the polyol and the polyisocyanate, known compounds, for example, polyol (i), diisocyanate (ii), etc. disclosed as raw materials for an urethane type oligomer (a) in International Publication W02009/016943, may, for example, be mentioned, and such descriptions of the International Publication are hereby incorporated by reference as a part of the disclosure of this specification.

The monomer (B1) having no reactive group with an isocyanate group may, for example, be an alkyl (meth)acrylate having a C₈₋₂₂ alkyl group (such as n-dodecyl (meth)acrylate, n-octadecyl (meth)acrylate or n-behenyl (meth)acrylate), or a (meth)acrylate having an alicyclic hydrocarbon group (such as isobornyl (meth)acrylate or adamantyl (meth)acrylate).

The monomer (B2) having a reactive group with an isocyanate group, and a curable functional group, may, for example, be a monomer having active hydrogen (such as a hydroxy group or an amino group) and a curable functional group, and specifically, it may, for example, be a hydroxyalkyl (meth)acrylate having a C₂₋₆ hydroxyalkyl group (such as 2-hydroxymethyl (meth)acrylate, 2-hydroxypropyl (meth)acrylate, 2-hydroxybutyl (meth)acrylate or 4-hydroxybutyl (meth)acrylate). A hydroxyalkyl acrylate having a C₂₋₄ hydroxyalkyl group, is preferred.

The molecular weight of the monomer (B) is from 125 to 600, preferably from 140 to 400, more preferably from 150 to 350. When the molecular weight of the monomer (B) is at least 125, evaporation of the monomer (B) can be prevented at the time of producing a display system by the after-described reduced-pressure lamination method. When the molecular weight of the monomer (B) is at most 600, the solubility of the monomer (B) in the oligomer (B) having a high molecular weight can be increased, and the viscosity adjustment as the seal part-forming photocurable resin composition can be carried out effectively.

The curable functional group of the monomer (B) may, for example, be an addition-polymerizable unsaturated group (such as an acryloyloxy group or a methacryloyloxy group) or a combination of an unsaturated group and a thiol group, and a group selected from an acryloyloxy group and a methacryloyloxy group is preferred from such a viewpoint that the curing rate is high, or a highly transparent seal part can be obtained. Further, the curable functional group in the monomer (B) having a relatively low molecular weight tends to have a higher reactivity than a curable functional group in the oligomer (A) having a relatively high molecular weight, and accordingly, curing of the monomer (B) is likely to preferentially proceed, whereby the entire viscosity of the composition is likely to abruptly increase, and the curing reaction is likely to be non-uniform. In order to obtain a homogeneous seal part, it is more preferred that the curable functional group of the monomer (B) is selected to be a methacryloyloxy group having a relatively low reactivity, and the curable functional group of the oligomer (A) is selected to be an acryloyloxy group having a relatively high reactivity.

The monomer (B) is preferably one having from 1 to 3 curable functional groups per molecule from the viewpoint of the curing property of the seal part-forming photocurable resin composition and the mechanical properties of the seal part.

The seal part-forming photocurable resin composition may contain, as the monomer (B), the monomer (B1) used as a diluent in the above-mentioned preparation method for urethane oligomer (A1). Further, it may contain, as the monomer (B), unreacted monomer (B2) used for the above-mentioned preparation method for urethane oligomer (A1).

The monomer (B) preferably contains a monomer (B3) having a hydroxy group from the viewpoint of the adhesion between the plates and the seal part or the solubility of the after-described various additives.

The monomer (B3) having a hydroxy group is preferably a hydroxy methacrylate having a C₃₋₈ hydroxyalkyl group with a number of hydroxy groups being from 1 to 2 (such as 2-hydroxypropyl methacrylate, 2-hydroxybutyl methacrylate, 4-hydroxybutyl methacrylate or 6-hydroxyhexyl methacrylate), and 2-hydroxybutyl methacrylate is particularly preferred.

The ratio of the monomer (B) is preferably from 15 to 50 mass%, preferably from 20 to 45 mass%, more preferably from 25 to 40 mass%, based on the total (100 mass%) of the oligomer (A) and the monomer (B). When the ratio of the monomer (B) is at least 15 mass%, the curing property of the seal part-forming photocurable resin composition, and the adhesion between the plates and the seal part, will be good. When the ratio of the monomer (B) is at most 50 mass%, the viscosity of the seal part-forming photocurable resin composition can easily be adjusted to be at least 500 Pa·s.

The photopolymerization initiator (C1) may be a photopolymerization initiator of an acetophenone type, a ketal type, a benzoin or benzoin ether type, a phosphine oxide type, a benzophenone type, a thioxanthone type or a quinone type, and a photopolymerization initiator of an acetophenone type, a ketal type or a benzoin ether type is preferred. In a case where curing by visible light with a short wavelength, a photopolymerization initiator of a phosphine oxide type is more preferred from the viewpoint of the absorption wavelength range. By a combined use of two or more photopolymerization initiators (C1) different in the absorption wavelength range, it is possible to further accelerate the curing time or to improve the surface curing property at the seal part. Further, the after-mentioned photopolymerization initiator (C2) may be used in combination within a range not to impair the curing of the resin layer-forming photocurable resin composition at a portion adjacent to the uncured seal part. In such a case, the ratio of the polymerization initiator (C1) to the polymerization initiator (C2) is preferably from 20:1 to 5:1, since it is thereby possible to efficiently and effectively carry out the curing.

The amount of the photopolymerization initiator (C1) (in a case where the photopolymerization initiator (C2) is contained, the total amount of (C1) and (C2)) is preferably from 0.01 to 10 parts by mass, more preferably from 0.1 to 2.5 parts by mass, per 100 parts by mass of the total of the oligomer (A) and the monomer (B).

The seal part-forming photocurable resin composition of the present invention may contain, as needed, various additives such as a polymerization inhibitor, a photocuring accelerator, a chain transfer agent, a photostabilizer (such as an ultraviolet absorber or a radical scavenger), an antioxidant, a flame retardant, an adhesion-improving agent (such as a silane coupling agent), a pigment, a dye, etc., and it preferably contains a polymerization inhibitor and a photostabilizer. Particularly when a polymerization inhibitor is contained in an amount smaller than the polymerization initiator, the stability of the seal part-forming photocurable resin composition can be improved, and the molecular weight of the resin layer after curing can be adjusted.

The polymerization inhibitor may be a polymerization inhibitor of a hydroquinone type (such as a 2,5-di-t-butylhydroquinone), a catechol type (such as a p-t-butylcatechol), an anthraquinone type, a phenothiazine type, a hydroxytoluene type or the like.

The photostabilizer may, for example, be an ultraviolet absorber (such as a benzotriazole type, a benzophenone type or a salicylate type) or a radical scavenger (such as a hindered amine type).

The antioxidant may be a compound of phosphorus type or sulfur type.

The total amount of such additives is preferably at most 10 parts by mass, more preferably at most 5 parts by mass, per 100 parts by mass of the total of the oligomer (A) and the monomer (B).

### (Step (b))

After the step (a), a liquid resin layer-forming photocurable resin composition is supplied to a region enclosed by the uncured seal part.

The amount of the resin layer-forming photocurable resin composition to be supplied is preliminarily set to be such an amount that the space formed by the seal part and the first and second plates is filled with the resin layer-forming photocurable resin composition, and the space between the first and second plates is made to be a predetermined distance (i.e. the resin layer is made to have a predetermined thickness). At that time, it is advisable to take into account the volume reduction due to shrinkage by curing of the resin layer-forming photocurable resin composition. Accordingly, the amount is preferably such an amount that the thickness of the resin layer-forming photocurable resin composition becomes to be slightly thicker than the predetermined thickness of the resin layer.

The supply method may, for example, be a method wherein the first plate is placed horizontally, and the composition is supplied in a dot shape, in a line shape or a planer shape by a supplying means such as a dispenser, a die coater or the like.

The resin layer-forming photocurable resin composition is a liquid composition comprising a curable compound and a photopolymerization initiator (C2).

The viscosity of the resin layer-forming photocurable resin composition is preferably from 0.05 to 50 Pa·s, more preferably from 1 to 20 Pa·s. When the viscosity is at least 0.05 Pa·s, the ratio of the after-described monomer (B') can be reduced, and deterioration of the physical properties of the resin layer can be suppressed. Further, the low boiling point component becomes less, such being desirable for the after-described reduced-pressure lamination method. When the viscosity is at most 50 Pa·s, air bubbles are less likely to remain in the resin layer.

The viscosity of the resin layer-forming photocurable resin composition is measured by means of an E model viscometer at 25°C.

The resin layer-forming photocurable resin composition is preferably one which comprises, as the above curable compound, at least one oligomer (A') having a curable functional group and having a number average molecular weight of from 1,000 to 100,000 and at least one monomer (B') having a curable functional group and having a molecular weight of from 125 to 600, wherein the ratio of the monomer (B') is from 40 to 80 mass%, per the total (100 mass%) of the oligomer (A') and the monomer (B').

The number average molecular weight of the oligomer (A') is from 1,000 to 100,000, preferably from 10,000 to 70,000. When the number average molecular weight of the oligomer (A') is within such a range, the viscosity of the resin layer-forming photocurable resin composition can easily be adjusted to be within the above mentioned range.

The number average molecular weight of the oligomer (A') is a number average molecular weight calculated as polystyrene, obtained by GPC measurement. Here, in a case where in the GPC measurement, a peak attributable to a non-reacted low molecular weight component (such as a monomer) appears, the number average molecular weight is obtained by excluding such a peak.

The curable functional group of the oligomer (A') may, for example, be an addition-polymerizable unsaturated group (such as an acryloyloxy group or a methacryloyloxy group) or a combination of an unsaturated group and a thiol group, and at least one group selected from the group consisting of an acryloyloxy group and a methacryloyloxy group is preferred from such a viewpoint that the curing rate is high, or a highly transparent resin layer can be obtained. Further, the curable functional group in the oligomer (A') having a relatively high molecular weight tends to have a lower reactivity than the curable functional group in the monomer (B') having a relatively low molecular weight, and therefore, curing of the monomer (B') tends to proceed preferentially, whereby the viscosity of the entire composition is likely to abruptly increase, and the curing reaction is likely to be non-uniform. In order to obtain a homogeneous resin layer, it is more preferred that the curable functional group of the oligomer (A') is selected to be an acryloyloxy group having a relatively high reactivity, and the curable functional group of the monomer (B') is selected to be a methacryloyloxy group having a relatively low reactivity.

The oligomer (A') is preferably one having from 1.8 to 4 curable functional groups per molecule on average, from the viewpoint of the curing property of the resin layer-forming photocurable resin composition and the mechanical properties of the resin layer.

The oligomer (A') may, for example, be an urethane oligomer having an urethane bond, a poly(meth)acrylate of a polyoxyalkylene polyol or a poly(meth)acrylate of a polyester polyol, and an urethane oligomer is preferred from such a viewpoint that the mechanical properties of the resin after curing, the adhesion to the plates, etc., can be widely adjusted by e.g. the molecular design of the urethane chain.

The ratio of the oligomer (A') is preferably from 20 to 60 mass%, more preferably from 30 to 50 mass%, based on the total (100 mass%) of the oligomer (A') and the monomer (B'). When the ratio of the oligomer (A') is at least 20 mass%, the heat resistance of the resin layer becomes good. When the ratio of the oligomer (A') is at most 60 mass%, the curing property of the resin layer-forming photocurable resin composition and the adhesion between the plates and the resin layer will be good.

The molecular weight of the monomer (B') is from 125 to 600, preferably from 140 to 400. When the molecular weight of the monomer (B') is at least 125, evaporation of the monomer can be prevented at the time of producing a display system by the after-described reduced-pressure lamination method. When the molecular weight of the monomer (B') is at most 600, the adhesion between the plates and the resin layer will be good.

The curable functional group of the monomer (B') may, for example, be an addition-polymerizable unsaturated group (such as an acryloyloxy group or a methacryloyloxy group) or a combination of an unsaturated group and a thiol group, and at least one group selected from the group consisting of an acryloyloxy group and a methacryloyloxy group is preferred from such a viewpoint that the curable rate is high, or a highly transparent resin layer can be obtained. Further, the curable functional group in the monomer (B') having a relatively low molecular weight tends to have a higher reactivity than the curable functional group in the oligomer (A') having a relatively high molecular weight, and accordingly, it is likely that curing of the monomer (B') tends to proceed preferentially, whereby the viscosity of the entire composition is likely to abruptly increase, and the curing reaction is likely to be non-uniform. In order to obtain a homogenous resin layer, it is more preferred that the curable functional group of the monomer (B') is selected to be a methacryloyloxy group having a relatively low reactivity, and the curable functional group of the oligomer (A') is selected to be an acryloyloxy group having a relatively high reactivity.

The monomer (B') is preferably one having from 1 to 3 curable functional groups per molecule from the viewpoint of the curing property of the resin layer-forming photocurable resin composition, and the mechanical properties of the resin layer.

The monomer (B') preferably contains a monomer (B3) having a hydroxy group from the viewpoint of the adhesion between the plates and the resin layer.

The monomer (B3) having a hydroxy group may be the same one as the monomer (B3) in the seal part-forming photocurable resin composition, and 2-hydroxybutyl methacrylate is particularly preferred.

The ratio of the monomer (B3) is preferably from 15 to 70 mass%, more preferably from 20 to 50 mass%, based on the total (100 mass%) of the oligomer (A') and the monomer (B'). When the ratio of the monomer (B3) is at least 15 mass%, the curing property of the resin layer-forming photocurable resin composition, and the adhesion between the plates and the resin layer will be good.

The monomer (B') preferably contains the following monomer (B4) from the viewpoint of the mechanical properties of the resin layer.

· Monomer (B4): An alkyl methacrylate having a C₈₋₂₂ alkyl group

The monomer (B4) may, for example, be n-dodecyl methacrylate, n-octadecyl methacrylate or n-behenyl methacrylate, and n-dodecyl methacrylate or n-octadecyl methacrylate is preferred.

The ratio of the monomer (B4) is preferably from 5 to 50 mass%, more preferably from 15 to 40 mass%, based on the total (100 mass%) of the oligomer (A') and the monomer (B'). When the ratio of the monomer (B4) is at least 5 mass%, the flexibility of the resin layer will be good.

The photopolymerization initiator (C2) contained in the resin layer-forming photocurable resin composition is one having an absorption wavelength range (λ2) existing in the longer wavelength side than the absorption wavelength range (λ1) of the photopolymerization initiator (C1) contained in the above mentioned seal part-forming photocurable resin composition. The photopolymerization initiator (C2) may be one having only the absorption wavelength range (λ2), or one having the absorption wavelength range (λ2) and an absorption wavelength range (λ') which overlaps the absorption wavelength range (λ1).

The photopolymerization initiator (C2) for the resin layer-forming photocurable resin composition may, for example, be a photopolymerization initiator of an acetophenone type, a ketal type, a benzoin or benzoin ether type, a phosphine oxide type, a benzophenone type, a thioxanthone type or a quinone type, and a photopolymerization initiator of a phosphine oxide type or a thioxanthone type is preferred. With a view to preventing coloration after the photopolymerization reaction, a phosphine oxide type is particularly preferred.

As the photopolymerization initiator (C2), among these photopolymerization initiators, one having an absorption wavelength range (λ2), as opposed to the photopolymerization initiator (C1), is suitably selected for use.

The amount of the photopolymerization initiator (C2) is preferably from 0.01 to 10 parts by mass, more preferably from 0.1 to 2.5 parts by mass, per 100 parts by mass of the total of the oligomer (A') and the monomer (B').

The resin layer-forming photocurable resin composition may contain, as the case requires, various additives such as a polymerization inhibitor, a photocuring accelerator, a chain transfer agent, a photostabilizer (such as an ultraviolet absorber or a radical scavenger), an antioxidant, a flame retardant, an adhesion-improving agent (such as a silane coupling agent), a pigment, a dye, etc., and it preferably contains a polymerization inhibitor and a photostabilizer. Particularly, when a polymerization inhibitor is contained in an amount smaller than the polymerization initiator, the stability of the resin layer-forming photocurable resin composition can be improved, and the molecular weight of the resin layer after curing can also be adjusted.

### (Step (c))

After the step (b), the first plate having the resin layer-forming photocurable resin composition supplied, is introduced into a reduced-pressure apparatus, and the first plate is placed horizontally on a fixed support table in the reduced-pressure apparatus so that the surface of the curable resin composition faces upward.

At an upper portion in the reduced-pressure apparatus, a vertically movable support mechanism is provided, and the second plate is attached to the movable support mechanism. In a case where the second plate is a display device, the surface of the image display side is permitted to face downward. In a case where an antireflection layer is formed on a surface of the second plate, the surface on the side where the antireflection layer is not formed, is permitted to face downward.

The second plate is located above the first plate and at a position not in contact with the curable resin composition. That is, the second plate and the resin layer-forming photocurable resin composition on the first plate, are permitted to face each other without being in contact with each other.

Otherwise, a vertically movable support mechanism may be provided at a lower position in the reduced-pressure apparatus, and the first plate having the curable resin composition supplied, may be placed on the movable support mechanism. In such a case, the second plate is attached to a fixed support table provided at an upper portion in the reduced-pressure apparatus, and the first and second plates are permitted to face each other.

Otherwise, both the first and second plates may be supported by movable support mechanisms provided one above the other in the reduced-pressure apparatus.

After positioning the first and second plates at predetermined positions, the inside of the reduced-pressure apparatus is depressurized to a predetermined reduced-pressure atmosphere. If it possible, during the depressurizing operation or after depressurized to the reduced-pressure atmosphere, the first and second plates may be positioned at the predetermined positions in the reduced-pressure apparatus.

After the inside of the reduced-pressure apparatus becomes a reduced-pressure atmosphere, the second plate supported by the movable support mechanism is moved downward to laminate the second plate on the resin layer-forming photocurable resin composition on the first plate.

By such laminating, the resin layer-forming photocurable resin composition is sealed in a space surrounded by the surface of the first plate (in the case of a display device, the surface of the image display side), the surface of the second plate (in the case of a display device, the surface of the image display side) and the uncured seal part.

At the time of such laminating, the resin layer-forming photocurable resin composition is pressed and spread by the own weight of the second plate, the pressing pressure from the movable support mechanism, etc., so that the resin layer-forming photocurable resin composition is filled in the above-mentioned space, and thereafter, at the time of exposing it to the high pressure atmosphere in step (d), a layer of the resin layer-forming photocurable resin composition having little or no air bubbles will be formed. Hereafter, the laminated member will be referred to also as "a laminate precursor".

At the time of the laminating, the reduced-pressure atmosphere is not more than 100 Pa and preferably at least 10 Pa. If the pressure of the reduced-pressure atmosphere is too low, such a reduced-pressure atmosphere may adversely affect the respective components (such as a curable compound, a photopolymerization initiator, a polymerization inhibitor, a photostabilizer, etc.) contained in the resin layer-forming photocurable resin composition. For example, if the pressure of the reduced-pressure atmosphere is too low, the respective components are likely to vaporize, or it may take time to provide such a reduced-pressure atmosphere. The pressure of the reduced-pressure atmosphere is more preferably from 15 to 40 Pa.

The period of time from the time when the first and second plates are laminated to the release of the reduced-pressure atmosphere is not particularly limited, and the reduced-pressure atmosphere may be released immediately after sealing of the resin layer-forming photocurable resin composition, or after sealing of the resin layer-forming photocurable resin composition, the reduced-pressure state may be maintained for a predetermined time. By maintaining the reduced-pressure state for a predetermined time, the resin layer-forming photocurable resin composition tends to flow in the sealed space, and the distance between the first and second plates becomes uniform, whereby even if the atmosphere pressure is increased, the sealed state may easily be maintained. The period of time for maintaining the reduced-pressure state may be a long time of at least a few hours, but from the viewpoint of the production efficiency, it is preferably within one hour, more preferably within 10 minutes.

In the process of the present invention, in a case where an uncured seal part is formed by applying a seal part-forming photocurable resin composition having a high viscosity, the thickness of the resin layer-forming photocurable resin composition in the laminate precursor obtained in the step (c) can be made to be relatively thick at a level of from 10 µm to 3 mm.

### (Step (d))

After releasing the reduced-pressure atmosphere in Step (c), the laminate precursor is placed in a pressure atmosphere wherein the pressure of the atmosphere is not less than 50 kPa.

When the laminate precursor is placed in a pressure atmosphere of not less than 50 kPa, the first and second plates are pressed by the increased pressure in a direction to closely adhere to each other, whereby if air bubbles are formed in the sealed space in the laminate precursor, the resin layer-forming photocurable resin composition tends to flow into the air bubbles, and the entire sealed space will be uniformly filled by the resin layer-forming photocurable resin composition.

The pressure atmosphere is usually from 80 kPa to 120 kPa. The pressure atmosphere may be an atmospheric pressure atmosphere or may be a pressure higher than the atmospheric pressure atmosphere. The atmospheric air atmosphere is most preferred from such a viewpoint that the operation of e.g. curing the resin layer-forming photocurable resin composition can be carried out without requiring any special installation.

The period of time (hereinafter referred to as the high pressure retention time) from the time when the laminate precursor is placed in a pressure atmosphere of not less than 50 kPa to the initiation of the curing of the resin layer-forming photocurable resin composition is not particularly limited. In a case where a process of taking out the laminate precursor from the reduced-pressure apparatus and transferring it to a curing apparatus, and then initiating the curing, is carried out in an atmospheric pressure atmosphere, the time required for such a process is the high pressure retention time. Accordingly, in a case where at the time when the laminate precursor is placed in the atmospheric air atmosphere, air bubbles are already not present in the sealed space of the laminate precursor, or air bubbles have disappeared during the process, the resin layer-forming photocurable resin composition can be immediately cured. In a case where it takes time until air bubbles disappear, the laminated precursor is held in the atmosphere under a pressure of not less than 50 kPa until the air bubbles disappear. Further, usually, there will be no trouble even if the high pressure retention becomes long, and therefore, the high pressure retention time may be prolonged from other necessity of the process. The high pressure retention time may be as long as more than one day, but from the viewpoint of the production efficiency, it is preferably within 6 hours, more preferably within 1 hour, and from the viewpoint of high production efficiency, it is particularly preferably within 10 minutes.

Then, the resin layer-forming photocurable resin composition is cured, whereby a resin layer to bond the display device and the protective plate is formed thereby to obtain a display system. At that time, the uncured seal part formed of the seal part-forming photocurable resin composition may be cured at the same time as the curing of the resin layer-forming photocurable resin composition, or may preliminarily be precured before the curing of the resin layer-forming photocurable resin composition.

The resin layer-forming photocurable resin composition and the seal part-forming photocurable resin composition are cured by irradiation with light. For example, by applying ultraviolet light or visible light with a short wavelength from a light source (such as a ultraviolet lamp, a high pressure mercury lamp or UV-LED), the photocurable resin compositions are cured.

At that time, light is applied from a side having an optical transparency among the first and second plates of the laminate precursor, to the resin layer-forming photocurable resin composition, and light is applied from the lateral side of the laminate precursor to the uncured seal part interposed between the light shielding part and the display device, and to the resin layer-forming photocurable resin composition.

Among the first and second plates, the display device does not have optical transparency in a non-operated state, and therefore, light is applied from the transparent plate side as the protective plate through the light transmitting part.

Further, in a case where a light shielding printed part is formed along the edge of the transparent plate, and the uncured seal part or the resin layer-forming photocurable resin composition is present at a region interposed between the light shielding printed part and the display device, insufficient curing can be done by light from the light transmitting part of the transparent plate only. Therefore, light is applied from the lateral side of the display device.

The light is more preferably ultraviolet light or visible light with a wavelength of at most 450 nm Particularly, in a case where an antireflection layer is formed on the transparent plate, and the antireflection layer or a transparent resin film forming such an antireflection layer, or an adhesive layer formed between such an antireflection film and the transparent plate, does not transmit ultraviolet light, curing by visible light becomes necessary.

As a light source for applying light from the lateral side, the light source which is used for applying light from the transparent plate side may be employed, but it is preferred to employ LED which emits ultraviolet light or visible light with a wavelength of at most 450 nm, from the viewpoint of the disposition space for the light source or the effective application of light to a specific portion.

As the step for applying light, after applying light from the front surface side of the transparent plate, application of light from the lateral side may be carried out, or reversely, after applying light from the lateral side of the transparent plate, application of light from the front surface side of the transparent plate may be carried out. Otherwise, light may be applied simultaneously from both sides. However, in order to further facilitate photocuring of the uncured seal part or the resin layer-forming photocurable resin composition at the light shielding printed part, it is preferred to apply light firstly from the lateral side, or simultaneously from the lateral side and from the transparent plate side.

For the following reason, in the process of the present invention, a photopolymerization initiator having an absorption wavelength range (λ2) existing in the longer wavelength side than the absorption wavelength range (λ1) of the photopolymerization initiator (C1) contained in the seal part-forming photocurable resin composition, is used as the photopolymerization initiator (C2) contained in the resin layer-forming photocurable resin composition, and light which contains light with a wavelength in the absorption wavelength range (λ1) and light with a wavelength in the absorption wavelength range (λ2), is used as the light applied from the lateral side of the laminate precursor.

### REASON:

As shown in Fig. 12, the width n of the uncured seal part interposed between the light shielding part and the display device is from 0.5 to 2 mm, and the width p of the resin layer-forming photocurable resin composition interposed between the light shielding part and the display device is from 1 to 10 mm. That is, such widths are larger than the thickness of the resin layer of from 0.03 to 2 mm in many cases, and when the display system is viewed from the front surface side, the seal part is in a state sealed by the light shielding part. Therefore, light applied from the lateral side tends to hardly reach the resin layer-forming photocurable resin composition at the boundary portion between the light shielding printed part and the light transmitting part.

In such a situation, if one having exactly the same absorption wavelength range is used as the photopolymerization initiator for the uncured seal part and as the photopolymerization initiator for the resin layer-forming photocurable resin composition, light applied from the lateral side will be absorbed mostly by the photopolymerization initiator of the uncured seal part, whereby light required for curing will not sufficiently reach the resin layer-forming photocurable resin composition, and curing cannot be sufficiently carried out. If the curing of the resin layer-forming photocurable resin composition is not sufficient at the light shielding printed part, the resin layer-forming photocurable resin composition is not sufficiently cured, or the uncured resin layer-forming photocurable resin composition may be diffused with time at the boundary portion between the light shielding printed part and the light transmitting part, and due to a slight difference in the diffractive index between the sufficiently cured resin layer at the light transmitting part and the portion where curing is not sufficient, an optical strain may be formed in the transmitted light at the boundary portion between the light shielding printed part and the light transmitting part, and there may be a deterioration of the image quality.

Whereas, in the process of the present invention, as the photopolymerization initiator (C2) for the resin layer-forming photocurable resin composition, a photopolymerization initiator (C2) having an absorption wavelength range (λ2) existing in the longer wavelength side than an absorption wavelength range (λ1) of the photopolymerization initiator (C1) for the uncured seal part, is used, and as the light applied from the lateral side of the laminate precursor, both of light with a wavelength in the absorption wavelength range (λ1) and light with a wavelength in the absorption wavelength range (λ2) are used. Thus, the light with a wavelength in the absorption wavelength range (λ2) not absorbed by the photopolymerization initiator (C1) in the uncured seal part will sufficiently reach the resin layer-forming photocurable resin composition interposed between the light shielding part and the display device, whereby curing of the resin layer-forming photocurable resin composition can be carried out sufficiently by the photopolymerization initiator (C2) having the absorption wavelength range (λ2).

In such a case, light from a light source having an emission wavelength range which overlaps at least partly with the absorption wavelength range (λ1) and light from a light source having an emission wavelength range which overlaps at least partly with the absorption wavelength range (λ2), may be applied simultaneously or may be applied separately. Otherwise, light from a light source having an emission wavelength range which overlaps at least partly with both the absorption wavelength ranges (λ1) and (λ2), may be applied.

As a more specific example, it is possible to use, as the photopolymerization initiator (C2) for the resin layer-forming photocurable resin composition, a photopolymerization initiator (C2) having an absorption wavelength range (λ2) of visible light with a wavelength of at most 600 nm, preferably at most 500 nm, and to use, as the photopolymerization initiator (C1) for the seal part-forming photocurable resin composition, a photopolymerization initiator (C1) having an absorption wavelength range (λ2) of at least ultraviolet light (at most 380 nm).

### [Embodiments]

In the process of the present invention, it is optional to use, as the first plate, a back plate or a front plate. Therefore, the display system can be produced by one of the following two methods depending upon the selection of the first plate.

(α-1) A method wherein as the first plate, a display device (a back plate) is used, and as the second plate, a transparent plate (a front plate) to constitute a protective plate, is used.

(α-2) A method wherein as the first plate, a transparent plate (a front plate) to constitute a protective plate, is used, and as the second plate, a display device (a back plate) is used.

Now, taking the case of the method (α-1) as an example, the process for producing a display system in Fig. 1 will be described in detail with reference to the drawings.

### (Step (a))

As shown in Figs. 3 and 4, a seal part-forming photocurable resin composition of the present invention is applied along the edge of a display device 50 (the first plate) by e.g. a dispenser (not shown) to form an uncured seal part 12.

At the periphery of the display device, a wiring member such as FPC to transmit electric signals to operate the display device may sometimes be formed. At the time of holding the respective plates in the process of the present invention, it is preferred to dispose the display device as the first plate on a lower side, with a view to facilitating the disposition of the wiring member.

### (Step (b))

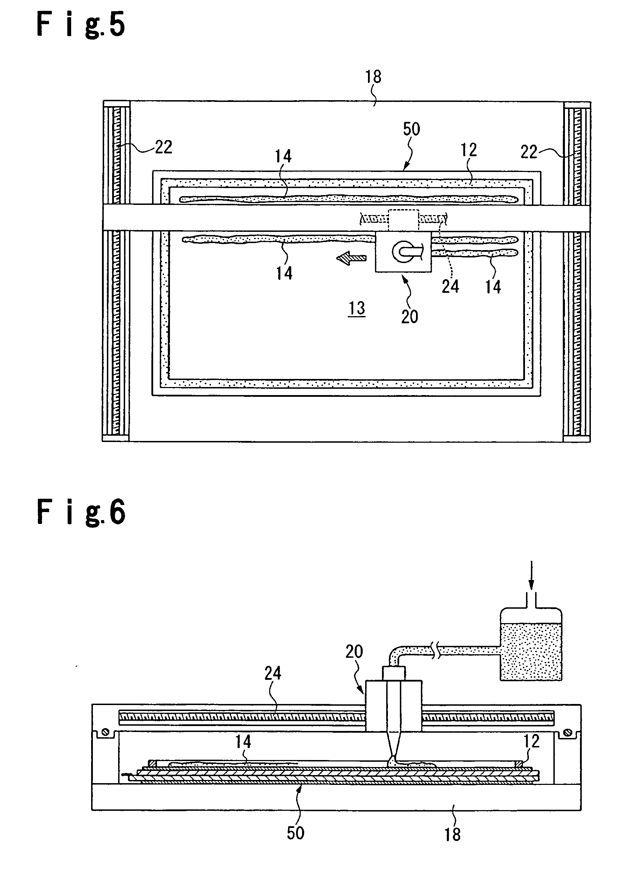

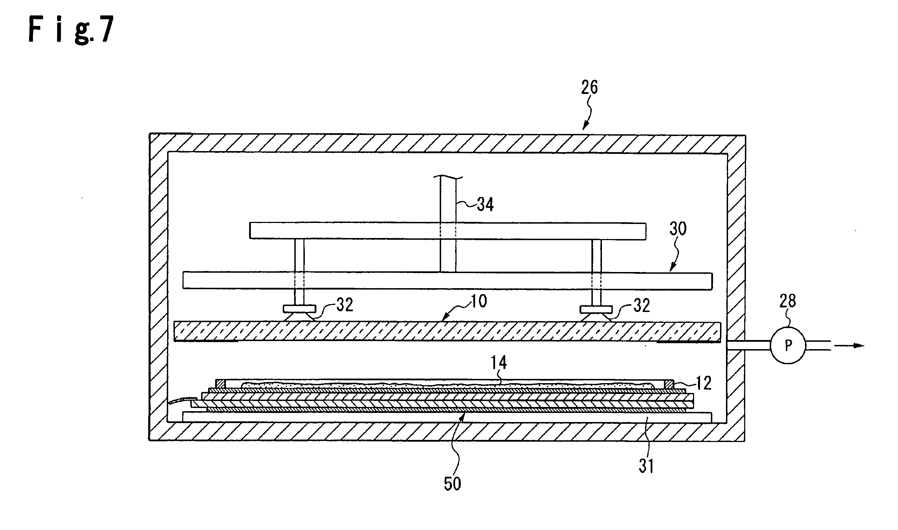

Then, as shown in Figs. 5 and 6, a resin layer-forming photocurable resin composition 14 is supplied to a rectangular region 13 enclosed by the uncured seal part 12 of the display device 50. The amount of the resin layer-forming photocurable resin composition 14 to be supplied is preliminarily set to be such an amount that the space sealed by the uncured seal part 12, the display device 50 and the transparent plate 10 (see Fig. 7) is filled with the resin layer-forming photocurable resin composition 14.

As shown in Figs. 5 and 6, the supplying of the resin layer-forming photocurable resin composition 14 is carried out by placing the display device 50 flatly on a lower press platen 18 and supplying the resin layer-forming photocurable resin composition 14 in a line-, strip- or dot-form by a dispenser 20 moving in a horizontal direction.

The dispenser 20 is made to be horizontally movable over the entire range of the region 13 by a known horizontal movement mechanism comprising a pair of feed screws 22 and a feed screw 24 perpendicular to the feed screws 22. Here, instead of the dispenser 20, a die coater may be employed.

### (Step (c))

Then, as shown in Fig. 7, the display device 50 and the transparent plate 10 (the second plate) are introduced into a reduced-pressure apparatus 26. At an upper portion in the reduced-pressure apparatus 26, an upper press platen 30 having a plurality of adsorption pads 32 is disposed, and at a lower portion, a lower press platen 31 is provided. The upper press platen 30 is made to be movable in a vertical direction by an air cylinder 34.

The transparent plate 10 is attached to the adsorption pads 32. The display device 50 is fixed on the lower press platen 31 with the side having the resin layer-forming photocurable resin composition 14 supplied to face upward.

Then, the air in the reduced-pressure apparatus 26 is suctioned by a vacuum pump 28. After the atmosphere pressure in the reduced-pressure apparatus 26 reaches a reduced-pressure atmosphere of e.g. from 15 to 40 Pa, the transparent plate 10 is lowered in a state adsorbed and held by the adsorption pads 32 of the upper press platen 30, towards the display device 50 waiting below, by operating the air cylinder 34. And, the display device 50 and the transparent plate 10 are laminated via the uncured seal part 12 to form a laminated member (hereinafter referred to also as a laminate precursor), and the laminate precursor is held in a reduced-pressure atmosphere for a predetermined period of time.

Here, the attached position of the display device 50 to the lower press platen 31, the number of adsorption pads 32, the attached position of the transparent plate 10 to the upper press platen 30, etc. are suitably adjusted depending upon the sizes, shapes, etc. of the display device 50 and the transparent plate 10. At that time, the glass substrate can be held in the reduced-pressure atmosphere stably by using electrostatic chucks as the adsorption pads and adopting the electrostatic chuck holding method as disclosed in the specification of Japanese Patent Application No. 2008-206124 (which is hereby incorporated by reference).

### (Step (d))

Then, the inside of the reduced-pressure apparatus 26 is made to be e.g. atmospheric pressure, whereupon the laminate precursor is taken out from the reduced pressure-apparatus 26. When the laminated precursor is placed in the atmospheric pressure atmosphere, the surface on the display device 50 side and the surface on the transparent plate 10 side of the laminate precursor are pressed by the atmospheric pressure, and the resin layer-forming photocurable resin composition 14 in the sealed space is pressed by the display device 50 and the transparent plate 10. By this pressure, the resin layer-forming photocurable resin composition 14 in the sealed space will flow, and the entire seal space will be uniformly filled with the resin layer-forming photocurable resin composition 14.

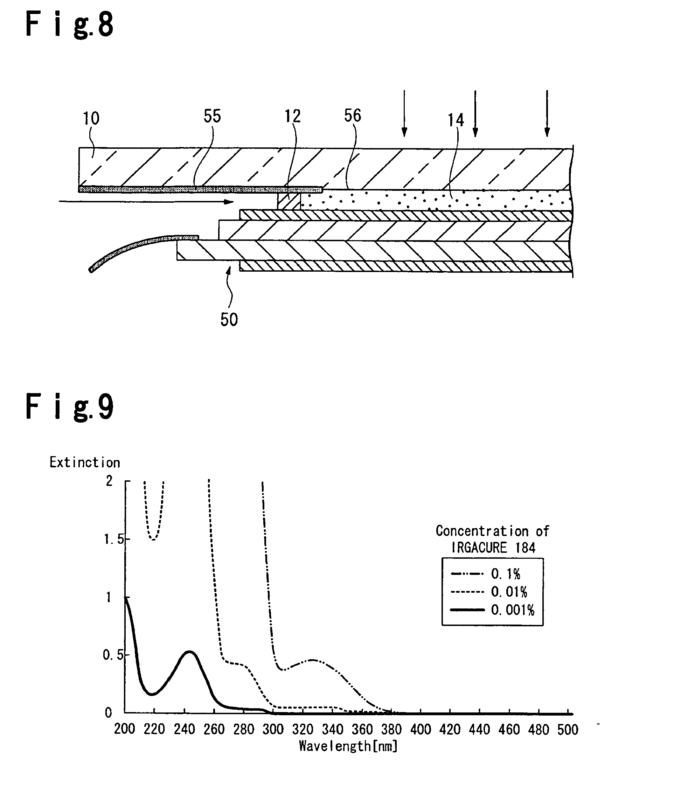

Then, as shown in Fig. 8, from the lateral side of the laminate precursor, light (ultraviolet light) is applied to the uncured seal part 12 interposed between the light shielding printed part 55 and the display device 50 and to the resin layer-forming photocurable resin composition 14 along the entire periphery of the display device, and from the transparent surface 10 side, light is applied through the transmitting part 56 to the resin layer-forming photocurable resin composition 14, thereby to cure the uncured seal part 12 and the resin layer-forming photocurable resin composition 14 in the laminate precursor to obtain a display system 1.

In the foregoing, the process for producing a display system of the present invention has been described in detail by taking the case of the method (α-1) as an example, but also in the case of the other method (α-2), a display system can be produced in the same manner.

### (Advantageous effects)

By the above described process for producing a display system of the present invention, a display system having a relatively large area can be produced without formation of air bubbles in the resin layer. Even if air bubbles remain in the resin layer-forming photocurable resin composition sealed under reduced pressure, in a high pressure atmosphere before curing the pressure is exerted also to the sealed resin layer-forming photocurable resin composition, and the volume of such air bubbles will decrease, and the air bubbles will easily disappear. For example, the volume of a gas in air bubbles in the resin layer-forming photocurable resin composition sealed under 100 Pa is considered to become 1/1,000 under 100 kPa. The gas may also be dissolved in the resin layer-forming photocurable resin composition, and the gas in air bubbles having a very small volume will readily be dissolved and will disappear in the resin layer-forming photocurable resin composition.

Further, even if a pressure such as the atmospheric air pressure is exerted to the resin layer-forming photocurable resin composition after sealing, since the liquid resin layer-forming photocurable resin composition is a flowable composition, such a pressure is uniformly distributed over the surface of the display device, and there is no such a possibility that a higher stress is exerted to a part of the surface of the display device in contact with the resin layer-forming photocurable resin composition, and a damage to the display device is less likely to occur. Further, a high temperature is not required for curing of the resin layer-forming photocurable resin composition, and a damage of the display device due to a high temperature is less likely to occur.

Further, the interface bonding strength between the resin layer and the display device by the curing of the resin layer-forming photocurable resin composition is higher than the interface bonding strength by fusion of a thermal fusion bonding resin. Besides, a liquid resin layer-forming photocurable resin composition is closely bonded to the surface of the display device and the transparent plate under a pressure and cured in that state, whereby a higher interface bonding strength can be obtained, and at the same time, uniform bonding to the surface of the display device or the transparent plate can be obtained, thus minimizing the possibility of partial lowering of the interface bonding strength. Therefore, there is little possibility of peeling at the surface of the resin layer, and there is little possibility of inclusion of moisture or a corrosive gas from a portion where the interface bonding strength is insufficient.

Furthermore, as compared with a method (injection method) of injecting a liquid resin layer-forming photocurable resin composition to a space having a wide area and a narrow distance between a pair of plates, it is possible to fill the resin layer-forming photocurable resin composition in a short period of time without substantial formation of air bubbles. Besides, it is possible to easily fill a high viscosity resin layer-forming photocurable resin composition with little restriction with respect to the viscosity of the resin layer-forming photocurable resin composition. Therefore, it is possible to employ a high viscosity resin layer-forming photocurable resin composition containing a curable compound having a relatively high molecular weight, whereby the strength of the resin layer can be improved.

Further, as the photopolymerization initiator (C2) for the resin layer-forming photocurable resin composition, a photopolymerization initiator (C2) having an absorption wavelength range (λ2) existing in the loner wavelength side than an absorption wavelength range (λ1) of a photopolymerization initiator (C1) for the uncured seal part, is used and as the light applied from the lateral side of the laminate precursor, both of light with a wavelength in the absorption wavelength range (λ1) and light with a wavelength in the absorption wavelength range (λ2) are used, whereby the light with a wavelength in the absorption wavelength range (λ2) not absorbed by the photopolymerization initiator (C1) in the uncured seal part will sufficiently reach the resin layer-forming photocurable resin composition interposed between the light shielding part and the display device, and curing of the resin layer-forming photocurable resin composition can be carried out sufficiently by the photopolymerization initiator (C2) having the absorption wavelength range (λ2).

### EXAMPLES

Now, Examples will be described which were carried out to confirm the effectiveness of the present invention. Examples 1 and 2 are working examples of the present invention, and Examples 3 and 4 are comparative examples.

### (Number average molecular weight)

The number average molecular weight of an oligomer was obtained by means of GPC apparatus (HLC-8020, manufactured by TOSOH CORPORATION).

### (Viscosity)

The viscosity of a photocurable resin composition was measured by means of E model viscometer (RE-85U, manufactured by Toki Sangyo Co., Ltd.)

### (Haze value)

The haze value was obtained by measurement in accordance with ASTMD1003 by using HAZE GARD II manufactured by Toyo Seiki Seisaku-sho, Ltd.)

### [Example 1]

### (Display device)

A liquid display device was taken out from a commercially available 32-inch liquid crystal television receiver (HDV-32WX2D-V manufactured by PC DEPOT CORPORATION). The liquid crystal display device had a length of 712 mm, a width of 412 mm and a thickness of about 2 mm. On each side of the liquid crystal display device, a polarizing plate was bonded, and six driving FPC were connected to one long side, and a printed circuit board was connected to the ends of FPC. The image display region had a length of 696 mm (corresponding to a1 in Fig. 11) and a width of 390 mm (corresponding to b1 in Fig. 11). Such a liquid crystal display device was designated as display device A.

### (Glass plate)

Along the edge of one surface of a soda lime glass having a length of 794 mm (corresponding to x₁ in Fig. 11), a width of 479 mm (corresponding to x₂ in Fig. 11) and a thickness of 3 mm, a light shielding printed part was formed in a frame form by ceramic printing containing a black pigment so that the light transmitting part had a length of 698 mm and a width of 392 mm. Then, over the entire surface of the back side of the light shielding printed part, an antireflection film (ReaLook X4001 manufactured by NOF Corporation) was bonded in such a state that a protective film was provided, to prepare a glass plate B to constitute a protective plate.

### (Photocurable resin composition for forming seal part)

A bifunctional polypropylene glycol having the molecular terminal modified by ethylene oxide (number average molecular weight calculated by hydroxy value: 4,000) and hexamethylene diisocyanate were mixed in a molar ratio of 6:7, then diluted with isobornyl acrylate (IBXA manufactured by OSAKA ORGANIC CHEMICAL INDUSTRY LTD.) and then reacted at 70°C in the presence of a tin compound catalyst to obtain a prepolymer, to which 2-hydroxyethyl acrylate was added in a molar ratio of substantially 1:2, followed by a reaction at 70°C thereby to obtain an urethane acrylate oligomer (hereinafter referred to as UC-1) solution diluted with 30 mass% of isobornyl acrylate. The number of curable functional groups in UC-1 was 2, and the number average molecular weight was about 55,000. The viscosity at 60°C of the UC-1 solution was about 580 Pa·s.

90 parts by mass of the UC-1 solution and 10 parts by mass of 2-hydroxybutyl methacrylate (LIGHT ESTER HOB manufactured by Kyoeisha Chemical Co., Ltd.) were uniformly mixed to obtain a mixture. 100 parts by mass of this mixture, 1 part by mass of 1-hydroxy-cyclohexyl-phenyl-ketone (photopolymerization initiator, IRGACURE 184, manufactured by Ciba Specialty Chemicals K.K.) and 0.04 part by mass of 2,5-di-t-butylhydroquinone (polymerization inhibitor) were uniformly mixed to obtain a seal part-forming photocurable resin composition C.

The seal part-forming photocurable resin composition C was put in a container, and in an open state, set in a reduced-pressure apparatus. The inside of the reduced-pressure apparatus was depressurized to about 20 Pa and maintained for 10 minutes to carry out defoaming treatment. The viscosity at 25°C of the seal part-forming photocurable resin composition was measured and found to be about 1,400 Pa·s.

### (Resin layer-forming photocurable resin composition)

A bifunctional polypropylene glycol having the molecular terminal modified with ethylene oxide (number average molecular weight calculated from the hydroxy value: 4,000) and isophorone diisocyanate were mixed in a molar ratio of 4:5 and reacted at 70°C in the presence of a tin compound to obtain a prepolymer, to which 2-hydroxyethyl acrylate was added in a molar ratio of substantially 1:2 and reacted at 70°C to obtain an urethane acrylate oligomer (hereinafter referred to as UA-2). The number of curable functional groups in UA-2 was 2; the number average molecular weight was about 24,000; and the viscosity at 25°C was about 830 Pa·s.

40 parts by mass of UA-2, 24 parts by mass of 2-hydroxybutyl methacrylate (LIGHT ESTER HOB manufactured by Kyoeisha Chemical Co., Ltd.) and 36 parts by mass of n-dodecyl methacrylate were uniformly mixed, and to 100 parts by mass of the mixture, 0.2 part by mass of bis(2,4,6-trimethylbenzoyl)-phenylphosphine oxide (photopolymerization initiator, IRGACURE 819, manufactured by Ciba Specialty Chemicals K.K.), 0.04 part by mass of 2,5-di-t-butylhydroquinone (polymerization inhibitor), 1 part by mass of 1,4-bis(3-mercaptobutyryloxy)butane (chain transfer agent, Karenz MT BD-1, manufactured by Showa Denko K.K.) and 0.3 part by mass of an ultraviolet absorber (TINUVIN 109 manufactured by Ciba Specialty Chemicals K.K.) were uniformly dissolved to obtain a resin layer-forming photocurable resin composition D.

The absorption characteristics of IRGACURE 184 and IRGACURE 819 are shown in Figs. 9 and 10, respectively.

As shown by the absorption characteristics, IRGACURE 819 has an absorption wavelength range (at most about 440 nm) on the longer wavelength side than the absorption wavelength range (at most about 380 nm) of IRGACURE 184.

The resin layer-forming photocurable resin composition D was put in a container and in an open state, set in a reduced-pressure apparatus. The inside of the reduced-pressure apparatus was depressurized to about 20 Pa and maintained for 10 minutes to carry out defoaming treatment. The viscosity at 25°C of the resin layer-forming photocurable resin composition was measured and found to be 1.7 Pa·s.

### (Step (a))

Over the entire periphery at a position of about 5 mm outside the image display region of the display device A, the seal part-forming photocurable resin composition C was applied by a dispenser so that the width was about 1 mm, and the coated thickness was about 0.6 mm, thereby to form an uncured seal part. Here, the area of the light transmitting part 56 enclosed by the light shielding printed part 55 was 271,440 mm², and the area of the resin layer 40 enclosed by the seal part 42 was 273,616 mm².

### (Step (b))

To a region inside of the uncured seal part applied along the periphery of the image display region of the display device A, the resin layer-forming photocurable resin composition D was supplied at plural positions by means of a dispenser so that the total mass would be 125 g.

During the supply of the resin layer-forming photocurable resin composition D, the shape of the uncured seal part was maintained.

### (Step (c))

On the upper surface of a lower press platen in a reduced-pressure apparatus wherein a lifting and lowering apparatus comprising a pair of press platens was set, the display device A was flatly placed so that the surface of the resin layer-forming photocurable resin composition faced upward.

The glass plate B was held on the lower surface of an upper press platen of the lifting and lowering apparatus in the reduced-pressure apparatus by means of an electrostatic chuck so that as viewed from above, the light transmitting part having no light shielding printed part of the glass plate B and the image display region of the display device A were located at the same position with a margin of about 1 mm, and so that in a vertical direction, the distance from the display device A became 30 mm.

The reduced-pressure apparatus was made in a sealed state and evacuated until the pressure in the reduced-pressure apparatus became about 10 Pa. By the lifting and lowering apparatus in the reduced-pressure apparatus, the upper and lower press platens were brought to be closer to each other so that the display device A and the glass plate B were pressed under a pressure of 2 kPa via the resin layer-forming photocurable resin composition D and held for 1 minute. The electrostatic chuck was deactivated, and from the upper press platen, the glass plate H was released, and the inside of the reduced-pressure apparatus was returned to the atmospheric pressure in about 15 seconds to obtain a laminate precursor E having the resin layer-forming photocurable resin composition D sealed by the display device A, the glass plate B and the uncured seal part.

In the laminate precursor, the shape of the uncured seal part was maintained substantially in the initial state.

### (Step (d))

To the uncured seal part (the seal part-forming photocurable resin composition C) formed along the periphery of the display device A of the laminate precursor E, light was applied from the lateral side of the display device A for about 10 minutes over the entire periphery of the uncured seal part by means of an ultraviolet light source (LL146-395 manufactured by Spectrum Illumination, wavelength: 395 nm) having ultraviolet LED disposed in a line-form, to cure the seal part. The intensity of the applied light was measured by an illuminometer (UV-M02 manufactured by ORC MANUFACTURING CO., LTD., photoreceiver: UV-42) and found to be about 1 mW/cm². After curing the seal part, the laminate precursor E was held horizontally and left to stand for about 10 minutes.

From the surface of the glass plate B side of the laminate precursor, ultraviolet light and visible light with a wavelength of at most 450 nm from a chemical lamp were uniformly applied to cure the resin layer-forming photocurable resin composition D to form a resin layer thereby to obtain a display system F. With the display system F, defects such as air bubbles remaining in the resin layer were not observed, despite a step of removing air bubbles which is required during the production by a conventional injection method, was unnecessary. Further, a defect such as leakage of the resin layer-forming photocurable resin composition from the seal part was not observed. Further, the thickness of the resin layer was at the desired level (about 0.4 mm). The photochromic distribution of the chemical lamp used here, was as shown in Fig. 13.

To inspect the cured state of the resin layer-forming photocurable resin composition D beneath the light shielding printed part of the glass plate B, from the seal part after the curing, a stainless steel plate having a length of 35 mm, a width of 5 mm and a thickness of 0.25 mm, was inserted, whereby it was found that the resin layer beneath the light shielding printed part adjacent to the seal part did not flow, and the resin layer-forming photocurable resin composition D was sufficiently cured.

Instead of the display device A, a transparent laminated member was prepared in the same manner by using a glass plate having substantially the same size, and the haze value at a portion having no printed shielding part was measured and found to be at most 1%, and thus, it was good one having high transparency.

The display system F was returned to the housing for the liquid crystal television receiver from which the liquid crystal display device was taken out, and the wiring was re-connected, and the system was switched on, whereby an image with a display contrast higher than the initial level was obtained. Even if the image display surface was pushed strongly with a finger, the image was not disturbed, and the glass plate B effectively protected the display device A.

### [Example 2]

### (Seal part-forming photocurable resin composition)

90 parts by mass of the UC-1 solution and 10 parts by mass of 2-hydroxybutyl methacrylate (LIGHT ESTER HOB manufactured by Kyoeisha Chemical Co., Ltd.) were uniformly mixed to obtain a mixture. 100 parts by mass of the mixture, 0.9 part by mass of 1-hydroxy-cyclohexyl-phenyl-ketone (photopolymerization initiator, IRGACURE 184, manufactured by Ciba Specialty Chemicals K.K.), 0.1 part by mass of bis(2,4,6-trimethylbenzoyl)-phenylphosphine oxide (photopolymerization initiator, IRGACURE 819, manufactured by Ciba Specialty Chemicals K.K.) and 0.04 part by mass of 2,5-di-t-butylhydroquinone (polymerization inhibitor) were uniformly mixed to obtain a seal part-forming photocurable resin composition G.

A display system H was obtained in the same manner as in Example 1 except that the composition G was used as the seal part-forming photocurable resin composition.

In order to inspect the cured state of the resin layer-forming photocurable resin composition D beneath the light shielding printed part of the glass plate B bonded to the display system H, a stainless steel plate having a length of 35 mm, a width of 5 mm and a thickness of 0.25 mm was inserted from the seal part after curing, whereby it was found that the resin layer beneath the light shielding printed part adjacent to the seal part did not flow, and the resin layer-forming photocurable resin composition D was sufficiently cured.

### [Example 3]

### (Seal part-forming photocurable resin composition)

90 parts by mass of the UC-1 solution and 10 parts by mass of 2-hydroxybutyl methacrylate (LIGHT ESTER HOB manufactured by Kyoeisha Chemical Co., Ltd.) were uniformly mixed to obtain a mixture. 100 parts by mass of the mixture, 0.2 part by mass of bis(2,4,6-trimethylbenzoyl)-phenylphosphine oxide (photopolymerization initiator, IRGACURE 819, manufactured by Ciba Specialty Chemicals K.K.) and 0.04 part by mass of 2,5-di-t-butylhydroquinone (polymerization inhibitor) were uniformly mixed to obtain a seal part-forming photocurable resin composition I.

### (Resin layer-forming photocurable resin composition)

40 parts by mass of UA-2, 24 parts by mass of 2-hydroxybutyl methacrylate (LIGHT ESTER HOB manufactured by Kyoeisha Chemical Co., Ltd.) and 36 parts by mass of n-dodecyl methacrylate were uniformly mixed, and to 100 parts by mass of the mixture, 1 part by mass of 1-hydroxy-cyclohexyl-phenyl-ketone (photopolymerization initiator, IRGACURE 184, manufactured by Ciba Specialty Chemicals K.K.), 0.04 part by mass of 2,5-di-t-butylhydroquinone (polymerization inhibitor), 1 part by mass of 1,4-bis(3-mercaptobutyryloxy)butane (chain transfer agent, Karenz MT BD-1, manufactured by Showa Denko K.K.) and 0.3 part by mass of an ultraviolet absorber (TINUVIN 109, manufactured by Ciba Specialty Chemicals K.K.) were uniformly dissolved to obtain a resin layer-forming photocurable resin composition J.

A display system K was obtained in the same manner as in Example 1 except that the composition I was used as the seal part-forming photocurable resin composition, and the composition J was used as the resin layer-forming photocurable resin composition.

In order to inspect the cured state of the resin layer-forming photocurable resin composition J beneath the light shielding printed part of the glass plate B bonded to the display system K, a stainless steel plate having a length of 35 mm, a width of 5 mm and a thickness of 0.25 mm was inserted from the seal part after curing, whereby it was found that the resin layer beneath the light shielding printed part adjacent to the seal part did easily flow, and the resin layer-forming photocurable resin composition J was not sufficiently cured.

### [Example 4]

A display system was obtained in the same manner as in Example 1 except that the composition I used in Example 3, was used as the seal part-forming photocurable resin composition, and the composition D used in Example 1, was used as the resin layer-forming photocurable resin composition.

In order to inspect the cured state of the resin layer-forming photocurable resin composition D beneath the light shielding printed part of the glass plate B bonded to the display system L, a stainless steel plate having a length of 35 mm, a width of 5 mm and a thickness of 0.25 mm was inserted from the seal part after curing, whereby it was found that the resin layer beneath the light shielding printed part adjacent to the seal part did slightly flow although the flowability was less than the case of the display system K, and the resin layer-forming photocurable resin composition D was not sufficiently cured.

### INDUSTRIAL APPLICABILITY

According to the process for producing a display system of the present invention, the interface bonding strength between the resin layer and the display device, and the interface bonding strength between the resin layer and the protective plate, can be made high; formation of air bubbles in a liquid state curable resin composition can be sufficiently suppressed; curing of the curable resin composition can be sufficiently carried out; and a display system of high quality can suitably be obtained.

The entire disclosure of Japanese Patent Application No. 2009-297553 filed on December 28, 2009 including specification, claims, drawings and summary is incorporated herein by reference in its entirety.

### REFERENCE SYMBOLS

1: Display system
10: Transparent plate
12: Uncured seal part
13: Region
14: Resin layer-forming photocurable resin composition
40: Resin layer
42: Seal part
50: Display device
55: Light shielding printed part (light shielding part)
56: Light transmitting part

## Claims

1. A process for producing a display system comprising first and second plates, one of which is a transparent plate and the other is a display device, a resin layer interposed between the first and second plates, and a seal part enclosing the periphery of the resin layer, wherein a light shielding part is formed along the periphery of the transparent plate, and an area of a light transmitting part enclosed by the light shielding part is made smaller than an area of the resin layer enclosed by the seal part, which process comprises the following steps (a) to (d), wherein the following photopolymerization initiator (C2) has an absorption wavelength range (λ2) existing in the longer wavelength side than an absorption wavelength range (λ1) of the following photopolymerization initiator (C1), and light applied from the lateral side of the laminated member in the following step (d) contains light with a wavelength in the absorption wavelength range (λ1) and light with a wavelength in the absorption wavelength range (λ2):
(a) a step of forming an uncured seal part by applying a liquid seal part-forming photocurable resin composition comprising a curable compound and a photopolymerization initiator (C1), along the periphery of a surface of the first plate,
(b) a step of supplying a liquid resin layer-forming photocurable resin composition comprising a curable compound and a photopolymerization initiator (C2), in a region enclosed by the uncured seal part,
(c) a step of laminating the second plate on the resin layer-forming photocurable resin composition in a reduced-pressure atmosphere of at most 100 Pa, to obtain a laminated member having the resin layer-forming photocurable resin composition hermetically sealed by the first and second plates and the uncured seal part, and
(d) a step of curing the uncured seal part and the resin layer-forming photocurable resin composition by applying light from the transparent plate side of the laminated member through the light transmitting part to the resin layer-forming photocurable resin composition, and applying light from the lateral side of the laminated member to the uncured seal part interposed between the light shielding part and the display device, and to the resin layer-forming photocurable resin composition, in such a state that the laminated member is placed in a pressure atmosphere of at least 50 kPa.

2. The process for producing a display system according to Claim 1, wherein the photopolymerization initiator (C1) has an absorption wavelength range (λ1) for ultraviolet light but does not have an absorption wavelength range for visible light, and the photopolymerization initiator (C2) has at least an absorption wavelength range (λ2) for visible light of at most 600 nm.

3. The process for producing a display system according to Claim 1 or 2, wherein in the step (d),
the light applied from the transparent plate side of the laminated member through the light transmitting part to the resin layer-forming photocurable resin composition, is ultraviolet light, and
when the light is applied from the lateral side of the laminated member to the uncured seal part interposed between the light shielding part and the display device, and to the resin layer-forming photocurable resin composition, firstly, (1) light having an ultraviolet light wavelength range (λ1) but having no visible light wavelength range, is applied, and then, (2) light having an emission of at least visible light, is applied.

4. The process for producing a display system according to any one of Claims 1 to 3, wherein the seal part-forming photocurable resin composition comprises at least one oligomer (A) having a curable functional group and having a number average molecular weight of from 30,000 to 100,000, at least one monomer (B) having a curable functional group and having a molecular weight of from 125 to 600, and a photopolymerization initiator (C1), and the photopolymerization initiator (C1) is contained in an amount of from 0.01 to 10 parts by mass, per 100 parts by mass of the total of the oligomer (A) and the monomer (B).

5. The process for producing a display system according to any one of Claims 1 to 3, wherein the seal part-forming photocurable resin composition comprises at least one oligomer (A) having a curable functional group and having a number average molecular weight of from 30,000 to 100,000, at least one monomer (B) having a curable functional group and having a molecular weight of from 125 to 600, and photopolymerization initiators (C1) and (C2), and the photopolymerization initiators (C1) and (C2) are contained in an amount of from 0.01 to 10 parts by mass in total, per 100 parts by mass of the total of the oligomer (A) and the monomer (B).

6. The process for producing a display system according to any one of Claims 1 to 5, wherein the resin layer-forming photocurable resin composition comprises at least one oligomer (A') having a curable functional group and having a number average molecular weight of from 1,000 to 100,000, at least one monomer (B') having a curable functional group and having a molecular weight of from 125 to 600, and a photopolymerization initiator (C2), and the photopolymerization initiator (C2) is contained in an amount of from 0.01 to 10 parts by mass, per 100 parts by mass of the total of the oligomer (A') and the monomer (B').

7. The process for producing a display system according to any one of Claims 1 to 6, wherein in the laminated member obtainable in the step (c), the thickness of the resin layer-forming photocurable resin composition is from 10 µm to 3 mm.

8. The process for producing a display system according to any one of Claims 1 to 7, wherein the thickness of the resin layer-forming photocurable resin composition obtainable by curing in the step (d), is from 0.03 to 2 mm.

9. The process for producing a display system according to any one of Claims 1 to 8, wherein the thickness of the transparent plate is from 0.5 to 2 mm.

10. The process for producing a display system according to any one of Claims 1 to 9, wherein the width of the seal part obtainable in the step (a), is from 0.5 to 2 mm.

11. The process for producing a display system according to any one of Claims 1 to 10, wherein the display system in Claim 1 is a liquid crystal display system which has a size of at least 0.5 m × at least 0.4 m by vertical length × horizontal length.
